(19) Europäisches Patentamt

European Patent Office

Office européen des brevets

(11) **EP 4 553 910 A1**

(12) **EUROPEAN PATENT APPLICATION**

(43) Date of publication:
14.05.2025 Bulletin 2025/20

(21) Application number: 23209215.5

(22) Date of filing: **10.11.2023**

(51) International Patent Classification (IPC):
*H01M 4/04* (2006.01)   *C07G 1/00* (2011.01)
*C09D 197/00* (2006.01)   *H01M 4/131* (2010.01)
*H01M 4/139* (2010.01)   *H01M 4/62* (2006.01)
*H01M 10/0525* (2010.01)

(52) Cooperative Patent Classification (CPC):
H01M 4/0404; C07G 1/00; C09D 197/005;
H01M 4/131; H01M 4/139; H01M 4/622;
H01M 10/0525

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Borregaard AS
1721 Sarpsborg (NO)**

(72) Inventor: **The designation of the inventor has not
yet been filed**

(74) Representative: **Wallinger Ricker Schlotter
Tostmann
Patent- und Rechtsanwälte Partnerschaft mbB
Zweibrückenstraße 5-7
80331 München (DE)**

(54) **ELECTRODE COMPOSITION**

(57) The present invention relates to a composition for preparing a positive or negative electrode for a lithium ion or sodium ion battery, the composition comprising a lignin derivative. Further, the present invention relates to (i) the use of a lignin derivative as a dispersant in a composition for preparing a positive or negative electrode for a lithium or sodium ion battery, (ii) the use of a lignin derivative for lowering the shear rate of a composition for preparing a positive or negative electrode for a lithium ion or sodium ion battery, (iii) a positive or negative electrode for a lithium ion or sodium ion battery prepared from the composition of the present invention, (iv) a lithium ion or sodium ion battery, comprising an electrode of the present invention, and (v) a method for preparing a positive or negative electrode for a lithium ion or sodium ion battery.

EP 4 553 910 A1

**Description**

**FIELD OF THE INVENTION**

The present invention relates to a composition for preparing a positive or negative electrode for a lithium ion or sodium ion battery, the composition comprising a lignin derivative. Further, the present invention relates to (i) the use of a lignin derivative as a dispersant in a composition for preparing a positive or negative electrode for a lithium or sodium ion battery, (ii) the use of a lignin derivative for lowering the shear rate of a composition for preparing a positive or negative electrode for a lithium ion or sodium ion battery, (iii) a positive or negative electrode for a lithium ion or sodium ion battery prepared from the composition of the present invention, (iv) a lithium ion or sodium ion battery, comprising an electrode of the present invention, and (v) a method for preparing a positive or negative electrode for a lithium ion or sodium ion battery.

**BACKGROUND OF THE INVENTION**

Electrodes for lithium ion and sodium ion batteries (also referred to as "Li-ion" and "Na-ion" batteries) are generally prepared by coating a current collector (for example copper or aluminum foil) with an electrode slurry and drying the obtained coated current collector to remove the solvent and to form a solid electrode layer. The solid electrode layer may be further compressed using a calendering process to improve the electrode's mechanical stability and density. Finally, the electrode is cut into the desired shape and size. The electrode slurry typically contains active material, conductive additives, and a binder suspended in a solvent. Further components may also be present.

Environmental and safety considerations make aqueous electrode slurries desirable, i.e. it is generally desirable that the solvent of the electrode slurry is or comprises water. However, due to their physicochemical properties (e.g. particle size, surface charge, or surface functionalization), many active materials - for example lithium metal oxides as used as an active positive electrode material in lithium ion batteries - aggregate/agglomerate in aqueous slurries, thereby negatively affecting rheology and preventing the formation of a uniform coating when cast on a current collector. In particular, aggregation/agglomeration between such particles can occur in water due to hydrogen bonding and strong electrostatic forces. In order to ensure electrodes of consistent and high quality, this should be avoided. Furthermore, particle aggregation/agglomeration results in poor contact between the active materials and the conductive additives, and thereby in poor conductivity, and in an increased viscosity of the electrode slurry.

In contrast to water, organic solvents such as N-methyl pyrrolidone (NMP) have markedly lower ability to accommodate hydrogen bonding and are less polar. Thus, organic systems, in particular N-methyl pyrrolidone (NMP), remain the industry standard.

In particular, the industrial solution has been to disperse the active materials in NMP, which is expensive, unsustainable, and hazardous, using polyvinylidene fluoride (PVDF), which is a mutagenic and teratogenic polymer, as a binder. For slurry processing performed in NMP, a related challenge is the need to uniformly disperse carbon components, often requiring the use of hazardous and expensive synthetic materials.

Thus, a need exists for renewable and non-hazardous materials that can disperse active materials in aqueous solution. Further, in order to be (directly) applicable in currently used technology, it is desirable that the dispersant also functions well in NMP solutions.

However, it is the particular and general desire to prepare electrodes from aqueous slurries, reducing the cost, hazard, and environmental impact of manufacturing. If the electrodes could be prepared from slurries using water as solvent, the cost would be significantly reduced and the process for recovery of NMP would be eliminated. Additionally, aqueous processing allows for the expensive and toxic synthetic PVDF binder to be replaced by lower cost, biobased binder, such as carboxymethyl cellulose (CMC) or xanthan gum, further contributing to a reduction overall electrode cost, as well as making the manufacturing process more environmentally benign.

**SUMMARY OF THE PRESENT INVENTION**

It is an object of the present invention to achieve all or some of the above-mentioned objects.

In particular, it is an object of the present invention to provide for a renewable and non-hazardous dispersant that can disperse active materials in aqueous solution. It is also an object to provide for a renewable and non-hazardous dispersant that works in both aqueous and NMP solutions. It is also an object of the present invention to provide for a positive or negative electrode composition (also referred to as "slurry") that shows good rheology and coating characteristics.

These and other objects have been achieved by the claimed composition for preparing a positive or negative electrode for a lithium ion or sodium ion battery, which uses a lignin derivative as the dispersant.

The inventors of the present invention have found that lignin derivatives, in particular sulfonated lignin such as lignosulfonate, function very well as dispersants in aqueous and NMP-based electrode slurries. Unlike fossil-based dispersants, as currently used in the art, lignin derivative dispersants are produced from renewable resources (i.e., wood), and have significantly lower $CO_2$ footprints than their fossil-based counterparts. As a consequence, their use will contribute to reduce the $CO_2$ emissions during the battery manufacturing process.

Further, it has been found that lignin derivatives effectively disperse various active materials such as carbon-based materials (as used in negative electrodes) and lithium metal oxides (as used in positive electrodes) in water or NMP, as demonstrated by a decrease in slurry viscosity. Homogeneous electrodes with well dispersed components can then be cast from the slurry. An unexpected benefit resulting therefrom is the possibility of casting the slurries at very high concentrations - approximately twice the concentration reported elsewhere in the literature.

Further, it has been found that lignin-based dispersants function particularly well in positive electrode slurries for lithium ion or sodium ion batteries.

In a *first aspect*, the present invention relates to a composition for preparing a positive or negative electrode for a lithium ion or sodium ion battery.

In a *second aspect*, the present invention relates to the use of a lignin derivative as a dispersant in a composition for preparing a positive or negative electrode, preferably a positive electrode, for a lithium ion or sodium ion battery.

In a *third aspect*, the present invention relates to the use of a lignin derivative for lowering the viscosity of a composition for preparing a positive or negative electrode for a lithium ion or sodium ion battery.

In a *fourth aspect*, the present invention relates to a positive or negative electrode for a lithium ion or sodium ion battery, prepared from the composition according to the present invention.

In a *fifth aspect*, the present invention relates to a lithium ion or sodium ion battery, which comprises an electrode of the fourth aspect.

In a *sixth aspect*, the present invention relates to a method for preparing a positive or negative electrode.

**FIGURE DESCRIPTION**

Figure 1 shows an exemplary depiction of a lignosulfonate molecule as obtained from sulfite pulping.

Figure 2 shows slurry rheology of aqueous dispersions of three different Li-ion cathode active materials. Profiles of slurries containing 0.2 wt% lignosulfonate dispersant ("Vanisperse LI" from Borregaard) are presented as ⊡ , ⊸⊶ , and ▽ . Slurries without lignosulfonate are presented as ◆ , ▼ , and ▪ .

Figure 3 shows slurry rheology of NMP-dispersions of KS-6 graphite added at 75 vol% dispersed with different doses of lignosulfonic acid.

Figure 4 shows slurry rheology of NMP-dispersions of KS-6 graphite added at 75 vol% dispersed with different doses of a hardwood-derived sodium lignosulfonate.

Figure 5 shows slurry rheology of NMP-dispersions of KS-6 graphite added at 75 vol% dispersed with different doses of Kraft lignin.

Figure 6 shows slurry rheology of NMP-dispersions of KS-6 graphite added at 75 vol% dispersed with either 5 wt.% NMP-soluble lignosulfonic acid or 5 wt.% lignosulfonate, which has minimal solubility in NMP. The NMP-soluble lignosulfonic acid (denoted as "NMP Soluble Lignin" in Fig. 6) is the acidified version of the poorly soluble lignosulfonate.

Figure 7 shows slurry rheology of aqueous dispersions of 50 wt.% hard carbon with varying dosages of lignosulfonate.

**DETAILED DESCRIPTION OF THE INVENTION**

As noted above, the present invention is based on the surprising finding that lignin derivatives - for example sulfonated lignin such as lignosulfonate, or lignosulfonic acids - function very well as dispersants in aqueous and NMP-based electrode slurries. It has particularly been found that said lignin derivatives function particularly good in positive electrode slurries for lithium ion or sodium ion batteries.

It is assumed that lignin derivatives, in particular charged lignin derivatives, function as dispersants by forming a hydrating shell in aqueous solution around the particulate component. This ability of charged lignin to form a hydrating shell is owed to its polymorphic duality of function with significant polar and non-polar functional groups.

Since NMP has markedly lower ability to accommodate hydrogen bonding and is less polar than water, the ability to dissolve cationic species, which provide charge balance to lignosulfonates, is very limited. It was, thus, expected that lignin derivatives do not function very well as a dispersant in NMP-based slurries. The unexpectedly observed good dispersant capability of lignin derivatives in NMP is assumed to be derived primarily from steric interactions.

In particular, it has been found that lignin derivative dispersants reduce the slurry viscosity for a variety of cathode materials and across all sheer rates, thereby allowing to cast the slurries homogenously at very high concentrations - approximately twice the concentration reported elsewhere in the literature.

In a first aspect, the present invention relates to a composition for preparing a positive or negative electrode for a lithium ion or sodium ion battery. The composition comprises (a) a lignin derivative, (b) at least one active material, and (c) a solvent.

Compositions for preparing electrodes are present in the form of a slurry and are, thus, also referred to in the art as "electrode slurries", "electrode slurry compositions", or the like.

It is preferred that the composition is for preparing a positive electrode for a lithium ion battery or a sodium ion battery. Or, in other words, the present invention preferably relates to a positive electrode slurry for preparing a lithium ion or sodium ion battery. More preferably, the composition is for preparing a positive electrode for a lithium ion battery (i.e. a positive electrode slurry for a lithium ion battery). Alternatively, the composition can be for preparing a positive electrode for a sodium ion battery.

In one embodiment, the composition can be a composition for preparing a positive or negative electrode, preferably a positive electrode, for a lithium ion battery. In another embodiment, the composition can be a composition for preparing a positive or negative electrode, preferably a positive electrode, for a sodium ion battery.

As noted above, an unexpected benefit resulting from the use of lignin derivatives as a dispersant is the possibility of casting the slurries homogenously at very high concentrations - approximately twice the concentration reported elsewhere in the literature. Thus, it is preferred that the solvent is present in an amount of 10 to 90 wt.%, preferably 20 to 80 wt.%, more preferably 40 to 60 wt.%, even more preferably 45 to 55 wt.%, based on the total weight of the composition. Hence, the present invention allows for the use of rather low amounts of solvents, thereby rendering the whole process more ecological and economical.

For environmental and safety considerations, aqueous electrode slurries are particularly desirable. Thus, it is preferred that the solvent is or comprises water. Preferably, the solvent is water. As it is derivable from the examples, the present inventors have found that lignin derivatives are indeed suitable dispersants in aqueous systems, even at very high solids contents.

In addition to that, it is preferred that the dispersant can also be applied in current processes and technology without the need for fundamental process modifications. Thus, in another embodiment, the solvent is or comprises N-methyl pyrrolidone (NMP). In this embodiment the lignin derivative preferably has a solubility of more than 1 g in 100 mL of NMP, at 20 °C"), more preferably more than 5 g in 100 mL of NMP, even more preferably more than 10 g in 100 mL of NMP.

However, from a long-term perspective and for environmental and safety considerations, it is preferred that the composition does not comprise N-methyl pyrrolidone (NMP).

Also for environmental and safety considerations, it is preferred that the composition does not comprise polyvinylidene fluoride (PVDF).

The lignin derivative is preferably a sulfonated lignin, a carboxylated lignin, a hydrolyzed carboxylated lignin, or an amine-functionalized lignin.

Kraft lignin may also be used in the present invention.

Preferably, the lignin derivative is a sulfonated lignin. The sulfonated lignin is preferably lignosulfonate or sulfonated Kraft lignin, preferably lignosulfonate. It is particularly preferred that the sulfonated lignin is sodium lignosulfonate, calcium lignosulfonate, ammonium lignosulfonate, magnesium lignosulfonate, lignosulfonic acid, or any combination thereof, preferably sodium lignosulfonate or lignosulfonic acid.

Preferably, the lignin derivative is sodium lignosulfonate obtained from sulfite pulping, preferably sulfite pulping of softwood or hardwood, preferably softwood.

Lignin (also referred to as "native lignin") is one of the most abundant organic materials in nature and provides strength and support to trees and other plants. Lignin is sometimes also referred to as the "glue" in the cellulosic skeleton. Chemically, lignin is a class of complex organic polymers.

Thus, in accordance with the present invention, the term "lignin" relates to a biopolymer, respectively, a mixture of biopolymers, that is/are present in the support tissues of plants, in particular, in the cell walls providing rigidity to the plants. Lignin is a phenolic polymer, respectively, a mixture of a phenolic polymer. The composition of lignin depends on the plant and therefore varies depending on the plant it is derived from. Lignin in its native form, i.e., as present in the plant, is hydrophobic and aromatic. No restrictions exist in regard to the source of the lignin.

In accordance with the present invention, the term "lignin derivative" is to be understood to relate to any lignin that is no longer present in its native form, but has been subjected to a chemical derivatization process. Processes for making chemically modified lignin are generally known in the art, e.g. sulfite pulping.

As noted above, one preferred example of a lignin derivative is sulfonated lignin, preferably lignosulfonate. Lignosulfonate is obtained when lignin, respectively, lignin-containing cellulosic biomass is subjected to sulfite cooking. Thus, lignosulfonate may be described as the organic salt product recovered from digestion of wood, e.g. acid or basic sulfite pulping with sulfurous acid (salts). Preferred lignosulfonates can thus be described as anionic polyelectrolyte polymers. Hence, the term "lignosulfonate", as used within the context of the present application, refers to any lignin derivative which is formed during sulfite pulping of lignin-containing material, such as, e.g., wood, in the presence of, for example, sulfur dioxide and sulfite ions, respectively, bisulfite ions. For example, during the acidic sulfite pulping of lignin-based material, electrophilic carbon cations in the lignin are produced which are a result of the acid catalyzed ether cleavage. Thus, lignin may react, via these carbo-cations, with the sulfite, respectively, bisulfite ions under the formation of lignosulfonates. Another common route to sulfonated lignins is the sulfonation of lignin that has already been extracted from the biomass via other processes, such as Kraft or OrganoSolv lignins. Direct sulfonation of extracted lignins can be achieved via sulfite pulping or other reactions known in the art to introduce sulfonate groups such as sulfomethylation.

"Sulfite pulping" is generally known in the art of wood/plant material processing. Sulfite pulping may be advantageously used for converting almost pure cellulose fibers from lignocellulosic biomass (i.e. plant matter) into wood pulp. This "pulping" is typically achieved by extracting lignin from lignocellulosic biomass in large pressure vessels called digesters by using various salts of sulfurous acid. During sulfite pulping, lignin molecules are sulfonated and thereby rendered negatively charged and generally water-soluble. In sulfite pulping, sulfonate groups are generally introduced at the aliphatic moieties of lignin, i.e. not at the aromatic moieties. Thus, lignosulfonate obtained from sulfite pulping does not or not significantly contain aromatic sulfonate groups but only or essentially only *aliphatic* sulfonate groups. In addition, carboxylate groups are introduced into native lignin during sulfite pulping.

In accordance with the present invention, "sulfite pulping" refers to the process of extracting or reacting native lignin or lignin in Kraft pulp, with at least one salt of sulfurous acid. The salts used in said pulping process are preferably sulfites ($SO_3^{2-}$) or bisulfites ($HSO_3^-$). As noted above, by way of sulfite pulping, sulfonate groups are generally introduced at the aliphatic moieties of lignin, i.e. not at the aromatic moieties.

As referred to herein, an "*aliphatic sulfonate group*" is a sulfonate group that is bound to an aliphatic carbon atom, i.e. a carbon atom that is not part of an aromatic ring. In contrast, an "*aromatic sulfonate group*", as referred to herein, is a sulfonate group that is bound to a carbon atom that is part of an aromatic ring.

As noted above, Kraft lignin or sulfonated Kraft lignin are also suitable lignin derivatives. Kraft lignin is precipitated from Kraft alkaline pulping liquors, in particular from Kraft process pulp making during which the lignin has been broken down from its native form present in the wood pulp, representing molecular fractions of the original biopolymer. Kraft lignin can therefore be described as precipitated, unsulfonated alkaline lignin. Kraft lignin differs structurally and chemically from lignosulfonate, e.g., in that Kraft lignin is not water-soluble. Thus, if Kraft lignin is to be used in aqueous media, the Kraft lignin is preferably further sulfonated (i.e. sulfonated Kraft lignin). In embodiments, such sulfonated Kraft lignin may be obtained by treating Kraft lignin with alkali sulfite and alkylaldehyde at elevated temperature and/or pressure. Further, it has been found that Kraft lignin is a suitable dispersant in NMP-based media.

As referred to herein, a sulfonate group is a group having the chemical formula - $SO_3R'$, wherein R' is selected from the group consisting of an alkali metal ion or an alkaline earth metal ion. In sodium lignosulfonate R' is a sodium ion. In calcium lignosulfonate R' is a calcium ion. In ammonium lignosulfonate, R' is an ammonium ion. In magnesium lignosulfonate, R' is a magnesium ion. In lignosulfonic acid, R' is hydrogen. In the actual electrode slurry, however, the sulfonate groups are likely present in their free form (i.e. -$SO_3^-$). Such and similar scenarios are also covered when it is referred to a sulfonate group.

The lignin derivative in accordance with the present invention can be obtained in different ways.

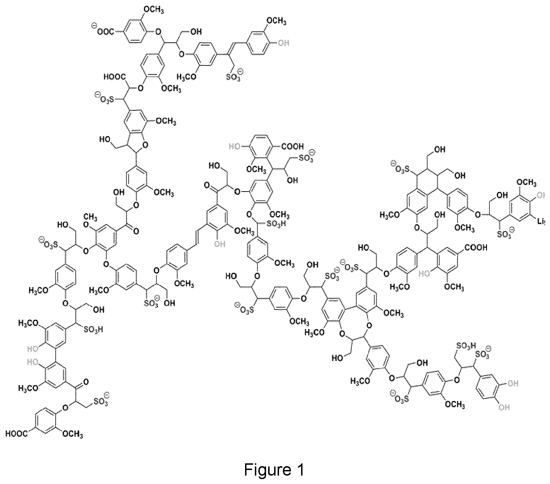

In accordance with what has been set out above, according to one preferred embodiment, the lignin derivative is obtained by means of treating native lignin in a sulfite pulping process, thereby obtaining a lignin derivative with -COOR and sulfonate groups, wherein R is a cation or hydrogen, wherein the cation is preferably an ammonium ion, an alkali metal ion, an alkaline earth metal ion. R can also be any mixture of the above-mentioned options. The fact that "R" can be any mixture of an ammonium ion, hydrogen, an alkali metal ion, an alkaline earth metal ion is due to the fact that a lignin derivative comprises a multitude of -COOR groups, which may be present in different forms. For example, some -COOR groups may be present in the form of -COOH groups while others are present in a salt form, e.g. in the form of -COONa groups. In general, the -COOR group may be described as a carboxylic acid group or a salt thereof. However, as a person of skill in the art knows, in solution, the -COOR is likely present in its deprotonated form (i.e. -COO⁻). Such forms are also covered when the present invention refers to -COOR groups. Figure 1 shows an exemplary depiction of a lignosulfonate molecule as obtained from sulfite pulping.

According to one embodiment, the lignin derivative does not contain -COOR groups and/or sulfonate groups other than those derived from the lignin raw material or the sulfite pulping process. Preferably, the lignin derivative does not contain sulfonate groups and -COOR groups other than those derived from a sulfite pulping process.

A lignin derivative that is particularly advantageous for the present invention is (i) lignosulfonate that has been subjected to at least one further chemical or thermal treatment step, or (ii) sulfonated Kraft lignin that has been subjected to at least one further chemical or thermal treatment step. The chemical treatment step is preferably selected from oxidation and sulfonation. In this way, the polarity and hydrophilicity of the lignin derivative is further increased. In preferred embodiments, said oxidation step is selected from at least one of the following: oxidation with air (oxygen) and/or a periodate, peroxide, ozone or the like, optionally at elevated temperature, TEMPO oxidation, optionally in the presence of an oxidation catalyst, and other methods and agents known to the skilled person for oxidizing cellulosic biomass.

Also, as set out above, the lignosulfonate may be lignosulfonate as obtained from sulfite pulping. As referred to herein, "lignosulfonate as obtained from sulfite pulping" is lignosulfonate having a chemical structure that is the result of subjecting native lignin from cellulose to sulfite pulping. Or in other words, "*lignosulfonate as obtained from sulfite pulping*" is lignosulfonate directly obtained from a sulfite pulping process without the application of any post-pulping functionalization steps. Thus, lignosulfonate obtained as a byproduct of cellulose production by means of sulfite pulping is a "lignosulfonate as obtained from sulfite pulping" within the meaning of the present invention.

As referred to herein, a "*post-pulping functionalization step*" is a chemical or physical treatment step that is applied *subsequent* to sulfite pulping and that alters the molecular structure of lignosulfonate as obtained from sulfite pulping. However, any step applied after sulfite pulping that merely increases the purity of lignosulfonate as obtained from sulfite pulping without altering its the chemical structure, e.g. a washing step and the like, is not a "post-pulping functionalization step" within the meaning of the present application.

Preferably, the lignin derivative is obtained by treating lignosulfonate as obtained from sulfite pulping in a post-pulping oxidation step. That means that first lignosulfonate is prepared by treating native lignin in a sulfite pulping and then, the lignosulfonate as obtained from sulfite pulping is oxidized in a post-pulping oxidation step. It is to be understood that, in this case, no other post-pulping functionalizing steps are applied, except for washing and other purification steps that do not alter the molecular structure in any significant manner.

In embodiments, no (further) post-pulping functionalizing steps are applied in case the lignin derivative of the present invention is obtained by a sulfite pulping step. This also means that the lignin derivative does not contain sulfonate groups other than those derived from the sulfite pulping process. In particular, this means that the lignin derivative does not contain aromatic sulfonate groups. This embodiment is particularly advantageous, because in this case, lignosulfonate as obtained as a byproduct of cellulose production by means of sulfite pulping can be used, thereby rendering the lignin derivative highly cost-efficient and eco-friendly. Sulfite pulping is advantageously used at an industrial-scale processing of cellulose-based biomass since the sulfite pulping is then part of an integrated process that not only yields lignosulfonate but also cellulose pulp that can be further processed to yield valuable products / chemistry platforms.

According to another preferred embodiment, the lignin derivative is prepared by sulfonating Kraft lignin, i.e. lignin that has already been chemically modified in a Kraft pulping process. In preferred embodiment, sulfite pulping is used to sulfonate Kraft lignin.

According to another preferred embodiment, either the lignin derivative as obtained from sulfite pulping, or the sulfonated Kraft lignin is subjected to one further chemical treatment step, wherein said further step is selected from at least one oxidation step and/or thermal treatment step, preferably at least one oxidation step.

In preferred embodiments, said oxidation step is selected from at least one of the following: oxidation with an air (oxygen) and/or a periodate, peroxide, ozone or the like, optionally at elevated temperature, TEMPO oxidation, optionally in the presence of an oxidation catalyst and other methods and agents known to the skilled person for oxidizing cellulosic biomass.

Preferably, the lignin derivative comprises -COOR groups in an amount of more than 4 wt.%, more preferably more than 8 wt.%, even more preferably more than 12 wt.%, even more preferably more than 14 wt.%, based on dry matter. The amount of -COOR groups is determined by potentiometric titration as described in Methods in Lignin Chemistry, Stephen Y. Lin and Carlton W. Dence, Springer-Verlag Berlin Heidelberg, 1992, p 458-464, see the experimental part.

Further, the lignin derivative preferably comprises organic sulfur groups in an amount of less than 6 wt.%, more preferably less than 4 wt.%, even more preferably less than 2 wt%, based on dry matter. The amount of organic sulfur groups is determined according to the method in the experimental part.

Further, the lignin derivative preferably comprises methoxy groups in an amount of less than 6 wt.%, preferably equal to or less than 5.0 wt.%, preferably less than 5.0 wt.%, based on the total weight of the lignin derivative. Further preferably, the amount of methoxy groups is equal to or less than 4.0 wt.%, preferably less than 4.0 wt.%, based on the total weight of the oxidized sulfonated lignin. The amount of organic methoxy groups is determined according to the method in the experimental part.

The combination of lignosulfonic acid and N-methyl pyrrolidone (NMP) as the solvent has been shown to lead to good results. Thus, it is preferred that if the solvent is N-methyl pyrrolidone (NMP), the lignin derivative is lignosulfonic acid. Hence, according to a preferred embodiment, the sulfonated lignin derivative is lignosulfonic acid and the solvent is N-methyl pyrrolidone (NMP).

The solubility of molecules can be a useful way to understand and describe their physicochemical properties. The ability to quantify the solubility of a molecule originates in Hildebrand's solubility parameter, which is defined as the square root of the cohesive energy density, as found in "The solubility of nonelectrolytes, 3rd Ed." by J.H. Hildebrand and R.L. Scott, 1950,

The assumptions made for defining the Hildebrand parameter limit applicability due to their origins in hydrocarbons. Specifically, contributions from hydrogen bonding and solvent polarity were not included. Hansen Solubility Parameters (HSP) separates the cohesive energy density into dispersive, polar, and hydrogen bonding components, as described in "Hansen Solubility Parameters, A User's Handbook, 2nd Ed." By C.M. Hansen, 2007, https://www.hansen-solubility.com/HSP-science/for-beainners.php (an excerpt thereof is shown in **Annex 1**) and https://www.han

sen-solubility.com/HSP-science/sphere.php (an excerpt thereof is shown in **Annex 2**).

The HSP Distance between two molecules is referred to as $R_a$ and quantifies their similarity. Molecules with similar HSP values, and thus smaller $R_a$ values, are soluble with one another. The formula for $R_a$ is:

$$R_a = \sqrt{4(\delta_{D1} - \delta_{D2})^2 + (\delta_{P1} - \delta_{P2})^2 + (\delta_{H1} - \delta_{H2})^2}$$

Where $\delta_D$ refer to the Dispersion parameter, $\delta_P$ refers to the Polarizability parameter, and $\delta_H$ refers to the Hydrogen bonding parameter for two different molecules 1 and 2. Note the factor of 4 preceding $\delta_D$ is correct and has plausible theoretical and empirical substantiation as relayed in the reference noted above.

The HSP values for any molecule can be determined experimentally by attempting to dissolve a quantity of the molecule in different solvents and noting which solvents successfully dissolve the molecule. The average of the respective $\delta$ values for the solvents which dissolve the molecule provides the corresponding $\delta$ value for the molecule. This method is demonstrated in "The Hansen solubility of some lignosulfonates," by B.O. Myrvold, ResearchGate, 2014, 303264402.

For the NMP-soluble lignosulfonic acid, HSP values of 17.7, 13.4, and 13.7 MPa$^{1/2}$ were determined. The $R_a$ for the lignosulfonic acid and NMP is 6.6 MPa$^{1/2}$. As the lignosulfonic acid is soluble in NMP, it is apparent an $R_a$ of 6.6 MPa$^{1/2}$ or less is indicative of a lignin which is soluble in NMP. Of the solvents successfully dissolving lignosulfonic acid, the $R_a$ value was largest for ethylene glycol, affording an $R_a$ of 12.6 MPa$^{1/2}$, which suggests an $R_a$ of as much as 12.6 is suitable for dissolving a lignin in NMP.

It is preferred that the lignin or lignosulfonic acid possess an $R_a$ with NMP of less than 13 MPa$^{1/2}$, more preferably less than 7 MPa$^{1/2}$, most preferably less than 1 MPa$^{1/2}$.

Water is a particularly challenging solvent to accurately represent with HSP, and several different values have been reported. The HSP parameters for water used here are 15.5, 16,0, 42.3 MPa$^{1/2}$, per "Hansen Solubility Parameters, A User's Handbook, 2nd Ed." By C.M. Hansen, 2007.

A representative water-soluble lignin derivative was determined to possess HSP values of 19.8, 13.6, and 21.7 MPa$^{1/2}$, affording an $R_a$ of 22.5 MPa$^{1/2}$ relative to water. Other water-soluble lignin derivatives possess $R_a$ values as high as 28.8 MPa$^{1/2}$, as reported in B.O. Myrvold, ResearchGate, 2014, 303264402, and using the HSP values for water provided above.

It is thus preferred that water soluble lignin derivatives possess an $R_a$ with water of less than 29 MPa$^{1/2}$, more preferably less than 23 MPa$^{1/2}$, and most preferably less than 1 MPa$^{1/2}$.

The $R_a$ value calculated between the representative water-soluble lignin derivative and the lignosulfonic acid is 9.0 MPa$^{1/2}$. These two lignin materials display markedly different solubility in NMP.

It is thus preferred that the NMP-soluble lignin or lignosulfonic acid possess an $R_a$ of 9.0 MPa$^{1/2}$ relative to the HSP values of 17.7, 13.4, and 13.7 MPa$^{1/2}$, more preferred that the $R_a$ value is less than 6 MPa$^{1/2}$, and most preferably less than 1 MPa$^{1/2}$.

It is thus preferred for water soluble lignin derivatives to possess an $R_a$ with 19.8, 13.6, and 21.7 Mpa$^{1/2}$ of less than 9.0 Mpa$^{1/2}$, more preferably less than 6 Mpa$^{1/2}$, and most preferably less than 1 Mpa$^{1/2}$.

It has been found that low amounts of the lignin derivative are sufficient for achieving the desired results. Thus, it is preferred that the lignin derivative is present in an amount of 0.01 wt.% to 10 wt.%, dry matter, based on the overall weight of the composition.

Preferably, the lignin derivative is present in an amount of 0.01 wt.% to 4.5 wt.%, dry matter, based on the overall weight of the composition, preferably 0.01 wt.% to 1.0 wt.%, more preferably 0.01 wt.% to 0.5 wt.%.

It is particularly preferred that the lignin derivative is present in an amount of 0.01 wt.% to 4.5 wt.%, dry matter, based on the overall weight of the composition, preferably 0.01 wt.% to 4.0 wt.%, more preferably 0.01 wt.% to 3.5 wt.%, more preferably 0.01 wt.% to 3.0 wt.%, more preferably 0.01 wt.% to 2.5 wt.%, more preferably 0.01 wt.% to 2.0 wt.%, more preferably 0.05 wt.% to 1.5 wt.%, more preferably 0.05 wt.% to 1.0 wt.%, more preferably 0.05 wt.% to 0.8 wt.%, more preferably 0.05 wt.% to 0.7 wt.%, more preferably 0.07 wt.% to 0.7 wt.%, 0.07 wt.% to 0.6 wt.%, more preferably 0.07 wt.% to 0.6 wt.%, more preferably 0.08 wt.% to 0.4 wt.%, more preferably 0.1 wt.% to 0.3 wt.%.

Preferably, the composition further comprises a binder and/or a thickening agent, preferably both, wherein the binder is preferably selected from carboxymethylcellulose (CMC), styrene butadiene rubber (SBR), and xanthan gum.

It has been shown that low amounts of CMC are sufficient for achieving the desired effects. Thus, it is preferred that if the composition comprises CMC, said CMC is present in an amount of less than 5 wt.%, based on the overall dry weight of the composition, preferably less than 4 wt.%.

It is also preferred that the composition comprises a metal, preferably one or more of cobalt, nickel, iron, or manganese. In one embodiment, the composition comprises a metal oxide and/or a metal phosphate.

Also, it is preferred that the composition comprises hard carbon.

According to a preferred embodiment, the composition further comprises an electrically conductive carbon additive. Preferably, said electrically conductive carbon additive is selected from carbon black, graphite, graphene, carbon nanotubes, silicon/carbon composites, or a combination thereof.

The active material is preferably selected from the group of carbon or carbonaceous materials, in particular graphite; silicone or silicone-based materials; lithium; sodium; lithium or sodium alloys; lithium or sodium metal oxides, including complex oxides and mixed metal oxides; or any combination of all or some of the aforementioned materials.

According to a preferred embodiment, the active material is selected from a lithium metal oxide and/or a lithium metal phosphate. Preferably, the active material is selected from lithium cobalt oxide ($LiCoO_2$), lithium manganese oxide ($LiMn_2O_4$), lithium nickel oxide ($LiNiO_2$), lithium nickel manganese cobalt oxide (Li-NMC), lithium iron phosphate ($LiFePO_4$), lithium nickel cobalt aluminum oxide ($LiNiCoAlO_2$), or combinations thereof.

According to another embodiment, the active material is selected from a Sodium titanate ($Na_2Ti_3O_7$), sodium vanadate ($Na_3V_2(PO_4)_3$), sodium iron phosphate ($NaFePO_4$), sodium nickel manganese cobalt oxide ($Na(Ni_{0.5}Mn_{0.5})O_2$), sodium copper hexacyanoferrate ($Na_2CuFe(CN)_6$), sodium manganese oxide ($Na_2MnO_4$), sodium cobalt oxide ($NaCoO_2$), sodium iron oxide ($NaFeO_2$), sodium copper oxide ($NaCuO_2$), sodium titanium oxide ($Na_4Ti_5O_{12}$), sodium phosphorus oxynitride (NaPON), sodium sulfur ($Na_2S$), sodium niobium oxide ($Na_4Nb_2O_7$).

Polyacrylic acid is sometimes used in electrode composition. It has, however, been found that if necessary, rather low amounts of polyacrylic acid are sufficient for achieving the desired effects. Thus, it is preferred that if the composition comprises polyacrylic acid or a salt thereof, the polyacrylic acid or salt thereof is present in an amount of less than 20 wt.%, preferably less than 10 wt.%, based on the weight of the sulfonated lignin derivative. Preferably, the composition does not comprise polyacrylic acid or a salt thereof.

According to a preferred embodiment, the at least one active material is coated with an electrically conductive material, preferably carbon.

Preferably, the at least one active material is present in the form of particles. Preferably, the particles have an average diameter of 1.5 μm to 12.0 μm and/or 90% of the particles are 25 μm or smaller. The particle size can be determined by means of dynamic light scattering.

In a second aspect, the present invention relates to the use of a lignin derivative as a dispersant in a composition for preparing a positive or negative electrode for a lithium ion or sodium ion battery.

In accordance with the first aspect, the second aspect preferably relates to the use of a lignin derivative as a dispersant in a composition for preparing a positive electrode for a lithium ion or sodium ion battery, preferably a lithium ion battery.

In line with what has been set out above, the "composition for preparing a positive or negative electrode for a lithium ion or sodium ion battery" is also referred to as "electrode slurry", "electrode slurry composition", or the like, in the art.

In a third aspect, the present invention relates to the use of a lignin derivative for lowering the shear rate of a composition for preparing a positive or negative electrode for a lithium ion or sodium ion battery.

Again, the composition is preferably a composition for preparing a positive electrode for a lithium ion or sodium ion battery, preferably a lithium ion battery.

In a fourth aspect, the present invention relates to a positive or negative electrode for a lithium ion or sodium ion battery. The electrode is prepared from the composition of the present invention.

In line with the first aspect, the electrode is preferably a positive electrode.

In a fifth aspect, the present invention relates to a lithium ion or sodium ion battery, comprising an electrode of the fourth aspect. Preferably, the battery is a lithium ion battery.

In a sixth aspect, the present invention relates to a method for preparing a positive or negative electrode, preferably a positive electrode, for a lithium ion or sodium ion battery. The method comprises the following steps: (1) applying the composition of the present invention on a substrate, and (2) drying the composition.

Preferably, the method comprises a step (3) of compressing the product obtained from step (2) using a calendering process.

The present invention is now further described by means of the following Items:

1. Composition for preparing a positive or negative electrode for a lithium ion or sodium ion battery, the composition comprising:

    (a) a lignin derivative,

    (b) at least one active material, and

    (c) a solvent.

2. Composition according to Item 1, wherein the solvent is present in an amount of 10 to 90 wt.%, preferably 20 to 80 wt.%, more preferably 40 to 60 wt.%, even more preferably 45 to 55 wt.%, based on the total weight of the composition.

3. Composition according to Item 1 or 2, wherein the solvent is or comprises water, preferably the solvent is water.

4. Composition according to Item 1 or 2, wherein the solvent is or comprises N-methyl pyrrolidone (NMP).

5. Composition according to Items 1-3, characterized in that the composition does not comprise N-methyl pyrrolidone (NMP).

6. Composition according to any one of the preceding Items, characterized in that the composition does not comprise polyvinylidene fluoride (PVDF).

7. Composition according to any one of the preceding Items, wherein the composition is a slurry, in particular a positive electrode slurry.

8. Composition according to Item 7, wherein the slurry is an aqueous slurry.

9. Composition according to any one of the preceding Items, wherein the lignin derivative is a sulfonated lignin, a carboxylated lignin, a hydrolyzed carboxylated lignin, or an amine-functionalized lignin.

10. Composition according to any one of the preceding Items, wherein the lignin derivative is a sulfonated lignin.

11. Composition according to Item 10, wherein the sulfonated lignin is lignosulfonate, lignosulfonic acid or sulfonated Kraft lignin, preferably lignosulfonate.

12. Composition according to Item 10, wherein the sulfonated lignin is sodium lignosulfonate, calcium lignosulfonate, ammonium lignosulfonate, magnesium lignosulfonate, lignosulfonic acid, or any combination thereof, preferably sodium lignosulfonate or lignosulfonic acid.

13. Composition according to Item 10, wherein the sulfonated lignin is

    (i) lignosulfonate that has been subjected to at least one further chemical or thermal treatment step, or

    (ii) sulfonated Kraft lignin that has been subjected to at least one further chemical or thermal treatment step.

14. Composition according to Item 13, wherein the chemical treatment step is selected from oxidation and sulfonation.

15. Composition according to any one of the preceding Items, wherein the lignin derivative is lignosulfonic acid and the solvent is N-methyl pyrrolidone (NMP).

16. Composition according to any one of the preceding Items, wherein the lignin derivative is present in an amount of 0.01 wt.% to 10 wt.%, dry matter, based on the overall weight of the composition.

17. Composition according to Item 16, wherein the lignin derivative is present in an amount of 0.01 wt.% to 4.5 wt.%, dry matter, based on the overall weight of the composition, preferably 0.01 wt.% to 1.0 wt.%, more preferably 0.01 wt.% to 0.5 wt.%.

18. Composition according to Item 16, wherein the lignin derivative is present in an amount of 0.01 wt.% to 4.5 wt.%, dry matter, based on the overall weight of the composition, preferably 0.01 wt.% to 4.0 wt.%, more preferably 0.01 wt.% to 3.5 wt.%, more preferably 0.01 wt.% to 3.0 wt.%, more preferably 0.01 wt.% to 2.5 wt.%, more preferably 0.01 wt.% to 2.0 wt.%, more preferably 0.05 wt.% to 1.5 wt.%, more preferably 0.05 wt.% to 1.0 wt.%, more preferably 0.05 wt.% to 0.8 wt.%, more preferably 0.05 wt.% to 0.7 wt.%, more preferably 0.07 wt.% to 0.7 wt.%, 0.07 wt.% to 0.6 wt.%, more preferably 0.07 wt.% to 0.6 wt.%, more preferably 0.08 wt.% to 0.4 wt.%, more preferably 0.1 wt.% to 0.3 wt.%.

19. Composition according to any one of the preceding Items, wherein the composition further comprises a binder and/or a thickening agent.

20. Composition according to Item 19, wherein the binder is selected from CMC, styrene butadiene rubber (SBR) and xanthan gum.

21. Composition according to any one of the preceding Items, provided that if the composition comprises CMC, said CMC is present in an amount of less than 5 wt.%, based on the overall dry weight of the composition, preferably less than 4 wt.%.

22. Composition according to any one of the preceding Items, wherein the composition further comprises an electrically conductive carbon additive.

23. Composition according to Item 22, wherein said electrically conductive carbon additive is selected from carbon black, graphite, graphene, carbon nanotubes, silicon/carbon composites, or a combination thereof.

24. Composition according to any one of the preceding Items, wherein the active material is selected from a lithium metal oxide and/or a lithium metal phosphate.

25. Composition according to Item 24, wherein the active material is selected from lithium cobalt oxide ($LiCoO_2$), lithium manganese oxide ($LiMn_2O_4$), lithium nickel oxide ($LiNiO_2$), lithium nickel manganese cobalt oxide (Li-NMC), lithium iron phosphate ($LiFePO_4$), lithium nickel cobalt aluminum oxide ($LiNiCoAlO_2$), or combinations thereof.

26. Composition according to any one of the preceding Items, provided that if the composition comprises polyacrylic acid or a salt thereof, the polyacrylic acid or salt thereof is present in an amount of less than 20 wt.%, preferably less than 10 wt.%, based on the weight of the lignin derivative.

27. Composition according to any one of the preceding Items, wherein the composition does not comprise polyacrylic acid or a salt thereof.

28. Composition according to any one of the preceding Items, wherein the at least one active material is coated with an electrically conductive material, preferably carbon.

29. Composition according to any one of the preceding Items, wherein the at least one active material is present in the form of particles.

30. Composition according to Item 29, wherein the particles have an average diameter of 1.5 $\mu$m to 12.0 $\mu$m and/or where 90% of the particles are 25 $\mu$m or smaller.

31. Composition according to any one of the preceding Items, wherein the composition is for preparing a positive electrode for a lithium ion battery.

32. Use of a lignin derivative as a dispersant in a composition for preparing a positive or negative electrode, preferably a positive electrode, for a lithium ion or sodium ion battery.

33. Use of a lignin derivative for lowering the shear rate of a composition for preparing a positive or negative electrode, preferably a positive electrode, for a lithium ion or sodium ion battery.

34. Use according to Item 32 or 33, wherein the composition is an electrode slurry, preferably a positive electrode slurry.

35. Use according to any one of Items 32-34, wherein the lignin derivative is a lignin derivative as defined in the description.

36. Use according to any one of Items 32-34, wherein the lignin derivative is as defined in any one of Items 9-15.

37. Positive or negative electrode, preferably positive electrode, for a lithium ion or sodium ion battery, characterized in that it is prepared from the composition according to Items 1 to 31.

38. Lithium ion or sodium ion battery, preferably lithium ion battery, characterized in that it comprises an electrode, preferably a positive electrode, of Item 37.

39. Method for preparing a positive or negative electrode, preferably a positive electrode, for a lithium ion or sodium ion battery, the method comprising the following steps:

(1) applying the composition of any one of Items 1 to 31 on a substrate,

(2) drying the composition.

40. The method of item 39, further comprising a step (3) of compressing the product obtained from step (2) using a calendering process.

**EXAMPLES**

Example 1 - Aqueous electrode slurries

Aqueous electrode slurries were prepared containing 83 wt% solids ($LiCoO_2$ or $LiNiOMn_{0.4}Co_{0.2}O_{0.8}$, colloquially "NMC") or 63 wt% solids ($LiFePO_4$).

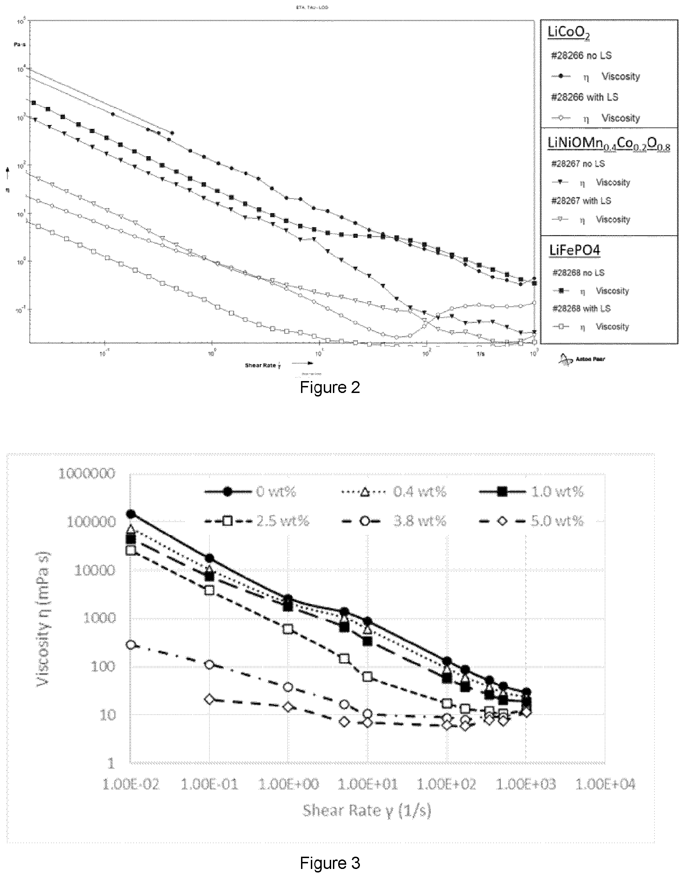

The rheology of these slurries was analyzed by sweeping the sheer rate logarithmically while the slurry was maintained at a temperature of 25 °C. The study of all slurries was repeated, but with the addition of 0.2 wt% lignosulfonate dispersant ("Vanisperse LI" from Borregaard). The results are shown in Figure 2.

As it is derivable from Figure 2, all samples show a viscosity decrease of several orders of magnitude at low sheer rate, while the $LiFePO_4$ viscosity difference continues out to the highest sheer rates measured.

Example 2 - NMP-based electrode slurries

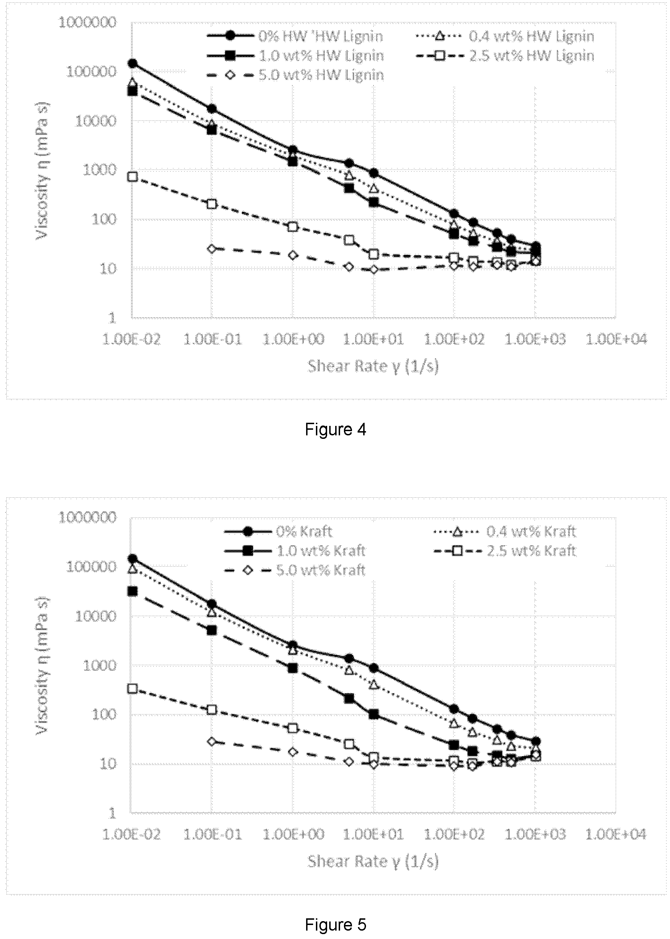

NMP slurries were prepared containing 75 vol% solids with KS-6 graphite. The rheology of these slurries was analyzed by sweeping the sheer rate logarithmically while the slurry was maintained at a temperature of 25 °C. The study of all slurries was repeated, but with varying doses of lignin-derived NMP-soluble dispersants added as a percent weight of solids in the slurry. The following lignin-derived NMP-soluble dispersants were used: (1) lignosulfonic acid (see Figure 3 for results), (2) hardwood-derived sodium lignosulfonate (see Figure 4 for results), (3) Kraft lignin (see Figure 5 for results).

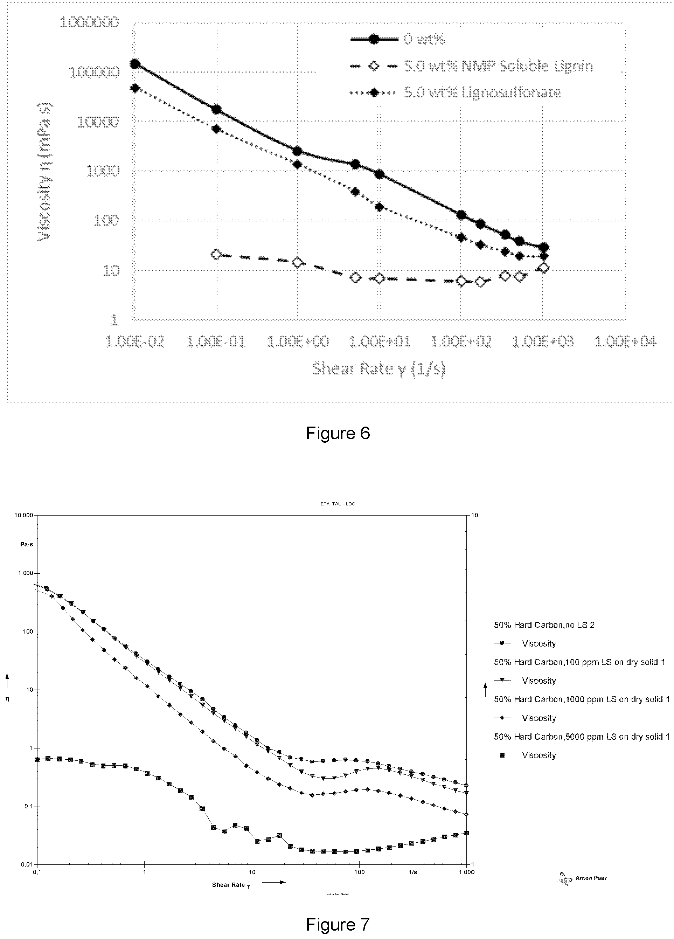

NMP slurries prepared and analyzed under identical conditions displays that the use of a NMP soluble lignin (lignosulfonic acid) reduces the slurry viscosity much more than the use of a lignin derivative (lignosulfonate) which is not NMP-soluble (see Figure 6 for results).

It can be seen that for all slurries and across all sheer rates, inclusion of a lignin derivative led to reduced slurry viscosity.

Example 3 - Hard carbon slurries

Aqueous slurries were prepared containing 50 wt% hard carbon.

The rheology of this slurry was analyzed by sweeping the sheer rate logarithmically while the slurry was maintained at a temperature of 25 °C. The study of all slurries was repeated, but with the addition of 0.01 - 0.5 wt% lignosulfonate dispersant ("Vanisperse LI" from Borregaard). The results are shown in Figure 7.

As it is derivable from Figure 7, all samples show a viscosity decrease, with a 0.5% dose displaying a viscosity decrease of several orders of magnitude.

Methoxy group analysis

Around 30 mg of lignin derivative were dissolved in 1000 mg deuterated 15 methanol (MeOD-d4) and then Amberlite IR-120 resin is added. The solution is left to stir for at least 30 min and then 620 $\mu$L are transferred to a NMR tube with an automatic pipette. The sample is prepared twice (two parallels and each parallel is run separately and the average result is the final answer as the MeO content). An HSQC experiment is then performed where the methoxy content is calculated against a linearity curve made using 20 an internal methoxy standard. NMR experiments were performed on a Bruker Avance III 500 MHz spectrometer using a selective inverse (SEI) probe for maximum 1H sensitivity. All spectra were recorded in MeOH-d4 at 300 K. 1H-13C HSQC spectra were optimized for the methoxy groups (1JC,H coupling constant of 145 Hz ) and recorded in the phasesensitive mode using echo-antiecho with the standard Bruker pulse sequence. 200 t1 25 experiments of 1k real data points (24 scans and 16 dummy scans) were recorded with a relaxation delay of 3 s, spectral width 9 ppm for proton and 130 ppm for carbon. Total experiment time 4.5 hours. A squared sine window function was employed in both directions after zerofilling to a matrix of 1k*1k data points. The spectra were phasecorrected in the F2-direction, baseline-corrected in both F1 and F2 direction using the 30 automatic 5th degree polynominal function, and the sum projection calculated for the F1- direction. The amount of methoxy groups was determined from the signal intensity in the 53-58 ppm region.

Organic sulfur analysis

The amount of "organic" sulfur (org. S), i.e. the amount of sulfur which is associated with the sulfonate groups attached to the lignin, i.e. the degree of sulfonation, 5 is determined based on the difference between total sulfur %S(tot) and the inorganic sulfur %S(inorg) using the following relation:

$$\%S(org) = \%S(tot) - \% S(inorg)$$

Total sulfur is determined with an element analyzer, for instance a ThermoQuest NCS 2500. Appropriate sample amounts (for instance 1-2 mg) are placed in tin capsules with a suitable catalyst (for instance Vanadium pentoxide). Total sulfur in the sample is then quantified using the 2,5-Bis(5-tert-butyl-2-benzo-oxazol-2-yl)thiophene (BBOT) standard, or other suitable sulfur standards. The samples are combusted at 1400 °C and all sulfur is oxidized to $SO_2$ and quantified.
Inorganic sulfur is determined by measuring sulfate in oxidized samples using ion chromatography with conductivity detection (Dionex instrument using an IonPac AS11-HC column with 13 mM OH- eluent). 30 mg samples are weighed into 50-ml volumetricflasks. 10 ml of 0.5 % NaOH and 5 ml of 3 % H2O2 are added to oxidize sulfurous inorganic anions into sulfate. Samples are then left 12-16 h to give time to react. Milli-Q water is added and pH neutralized by adding 2 ml of 5 % CH3COOH and diluted to the mark with Milli-Q water. Sulfate standards are prepared between 5 mg/L and 80 mg/L. The sulfate content in the oxidized samples is then determined using ion chromatography according to the instrument manual.

-COOH determination using P-NMR

Characterizing the molecular structure of lignosulfonates is generally challenging due to unknown impurities that occur in lignosulfonates. Specifically, low molecular weight carboxylic acids such as formic acid and acetic acid, which are formed from wood sugars and are often present in lignosulfonates, can perturb -COOH measurements.
Thus, a slightly adapted phosphorous NMR (P-NMR) method developed originally by Argyropoulos, D.S.; Abacherli, A.; Rincón, A.G.; Arx, U.V. [Quantitative 31P nuclear magnetic resonance (NMR) spectra of lignin. In Analytical Methods for Lignin Characterisation; International Lignin Institute: Lausanne, Switzerland, 2009] to quantify the density of -COOH groups on the lignin backbone was used.
In particular, the method involves a purification step to remove low molecular 5 weight carboxylic acid impurities (e.g. formic, acetic acid), and then measuring the -COOH group density on the lignin polymer using a phosphorylation reagent according to Argyropoulos et al., using a phosphorylation reagent and 31P-NMR.
Chemicals:

Internal Standard: Cholesterol 99%
Phosphorylation reagent: 2-Chloro-4,4,5,5-tetra-methyl-1,3,2-dioxa-phospholane 95% Deuterated solvent: CDCl3
Solvents: Pyridine Anhydrous 99,8% and N,N-Dimethylformamide anhydrous 99,8%
Drying agent: Molecular sieves 13X, Beads, 8-12 mesh
Resin: Amberlite IR120 H+ form

The analysis takes place in two days:

Day 1:
A glass pipette is filled with Amberlite. The resin is then rinsed with de-ionized water twice by eluting 2 x 1 mL through the pipette. The sample (200 mg) is weighed in a glass vial followed by de-ionized water (3 mL) and then it is left to stir for ca 10 min. The resulting solution is then filtered through the Amberlite filled glass pipette and the filtrate is collected in a round glass flask. The resin is then rinsed with water twice with 2 x 1 mL and also collected in the flask. The filtered sample is then frozen and freeze-dried overnight. The phosphorylation reaction is highly sensitive to water and all reagents and components 25 have to be dry. Hamilton syringes are used for the addition of the solvents in the reaction mixture and therefore have to be completely dry. In a glass beaker, molecular sieves are washed in pure acetone and then dried in the oven (105 °C) overnight. They will be used for the drying of the solvents in day 2.
Day 2:
A solvent mix of N,N-Dimethylformamide (DMF) with pyridine (1:1) is made in a glass vial containing dried molecular sieves. The vial is sealed to avoid humidity. Pyridine is also added in another glass vial containing dried sieves and the vial is sealed. This will be used to make a solution of 40 mg/mL of cholesterol (internal standard) in the dried pyridine. A dry solution of the deuterated solvent CDCl3 is also prepared by adding the deuterated chloroform in a glass vial with molecular sieves and the vial is sealed. Then, in a 2 mL glass vial, the dry CDCl3 (400 µL) is transferred followed by the phosphorylation reagent 10 2-Chloro-4,4,5,5-tetra-methyl-1,3,2-dioxa-phospholane (100 μL). The freeze-dried sample (30 mg ± 3 mg) is added in a 2 mL glass vial, followed by a magnetic stirrer, the solvent mixture of DMF:pyridine (1:1) (100 μL) and the mixture is left to stir for 30 min. Next, the cholesterol solution (100 μL) is added in the reaction mixture and it is left to stir for 15-30 min more. Last, the freshly made solution of the derivatization 15 reagent in CDCl3 (500 μL) is added dropwise and the reaction mixture is left to stir in 1h prior to NMR analysis.

NMR experiment:

The 31P NMR experiment is run with the BBO probe at 300 K. The NMR experiment settings are the following for a 500 MHz Avance III Bruker instrument:

Table

| Parameters | Value |
|---|---|
| P-31 frequency | 202.4867 Hz |
| Pulseprogram | zgig |
| Relaxation delay | 15 sec |
| Number of scans | 128 |
| Number of dummy scans | 4 |
| Sweepwidth | 70 ppm |
| Offset | 150 ppm |
| Acquisition time | 1.15 sec |
| FID resolution | 0.43 Hz |
| Temperature | 300 K |

Once the fid is acquired and fourier transformed, the phase of the frequency domain spectrum is corrected manually (.ph) followed by apodization-fourier transformation-automatic phase correction (efp) and finally base correction (abs). Calibration of the spectrum is done by using the sharp peak of the reaction's by-product between the phosphorylation reagent and water at 132.20 ppm. The cholesterol's peak at 144.8 ppm is integrated first between 145.0-144.4 ppm and calibrated at 1. The other signals are then integrated as follows:

Table 5

| Chemical shift δ areas (ppm) | OH type groups |
|---|---|
| 150.8-145.0 | Aliphatic |
| 144.3-140.2 | Condensed phenolic |
| 140.2-138.4 | Guaiacyl phenolic |
| 138.4-136.9 | p-Hydroxyl phenolic |
| 135.6-133.7 | Carboxylic acid |

The concentration (mmol OH/g sample) of each type of OH group is done by following the formula:

$$\text{mmol of the functional OH group/g sample} = \frac{C*A*IS*P}{M*L}$$

C: concentration of the internal standard (mg/mL)
A: Area of the functional OH group (when the integral of the cholesterol peak is calibrated at 1)
IS: Volume of the internal standard solution in pyridine added (0.1 mL)
M: Molecular weight of the internal standard (386.65 g/mol)
L: Weight of the freeze-dried sample added in the vial (g)
P: Purity of the internal standard (0.99)

The mass of -COOH groups on the lignin polymer can then be calculated using the molecular weight of a -COOH functional group (45.0174 g/mol), and the wt.% based on the total weight of the oxidized sulfonated lignin can be calculated.

**Annex 1**

<u>**HSP for Beginners**</u>

Hansen solubility parameters (HSP) explain why a solvent can dissolve fingernail polish, or a sticky spruce resin, or a rubber cement. The HSP of the solvent and the HSP of the thing that is dissolved are close, in other words, *Like Dissolves Like*. Here is a light-hearted YouTube video of this principle:
(limonene from lemons and the isoprene rubber of a party balloon are very much alike).
If the HSP were not close, such as the case for water relative to these same materials, the "solvent" would not be good. There are three numbers that together are called HSP. These fully describe how the solvent behaves in relation to many other things if their HSP are known or can be estimated. There are HSP for such common things as sugar and butter, but even aspirin, phthalates, drugs, and DNA have HSP. The HSP describe whether things prefer to be near each other or not. Water will not wet many surfaces because the HSP are too different, for example, but it dissolves sugar (to a large extent) since the HSP are close enough (but not a perfect match).
In practice solvents are represented as points in a three dimensional space called HSP space. This is because there are three parameters ($\delta D$, $\delta P$, and $\delta H$) that are required to describe where they like - or dislike - being found. What they dissolve, or like to be together with, will have similar HSP. It has been found that perfect HSP matches are not required for complete solubility, however. If one tests many solvents to see whether they are good or bad for the sticky spruce resin, one finds that the good ones clump together in a three dimensional plot that forms a sphere in the three dimensional HSP space with the HSP of the sticky spruce resin in the middle. There are characteristic differences in HSP in all three parameters that are allowed for good compatibility. These determine the radius of the sphere. Good solvents are within the sphere while bad ones are located on the outside.
Such spheres have been determined for hundreds of different things. In many cases their validity has been confirmed by correct predictions that mixing two non-solvents would dissolve a material when the HSP of the solvents were on opposite sides of the HSP sphere. Their mixture has HSP that depend directly on the relative amounts present, and becomes predictably "good" even though the individual solvents are not. Such synergistic mixtures are very important in practice and have been used to replace undesired solvents, to reduce costs, and to improve performance all at the same time.
The HSP correlation for rapid skin penetration by solvents is represented by the green sphere (the large sphere). Dioctyl phthalate (DOP) is represented by the small ball to the left and ethanol is represented by the small ball to the right. The 50/50 mixture will make it much easier for DOP to enter the skin. This is because the HSP for mixtures are additive according to the respective volume fraction of its components, and in this case the mix will be closer to the HSP of the green (large) sphere.

What can perhaps be surprising is that one can assign HSP to so many different things. Gases like carbon dioxide, solids like carbon-60, sugar, and biological materials like human skin, depot fat, DNA, and even some proteins all have HSP. The list can be continued with drugs, polymers, plasticizers, and in fact any organic material and even many inorganic materials like salts. The only requirement for an experimental confirmation is that the material must behave differently in a sufficient number of test solvents upon contact. One must find "good" and "bad" solvents. The definition of good can vary from swelling to totally soluble, from suspension of particles (pigments, fibers) for long times versus rapid settling, to rapid permeation through protective gloves to good protection, that is, no permeation. All of these tests have been used to assign HSP. Once the HSP are known one can systematically design products to meet given requirements, or interpret experiments to find out why things did what they did, even in complicated cases. The predictive ability is immense, and the understanding provided is satisfying to the curious who want to know why.

In the past it was surprisingly difficult to apply these simple concepts. But with HSPiP to do much of the interpretation and lots of data on solvents and other materials available in a useful format, things are much easier. There is enough information to allow reasonable predictions by computer only and the HSP of new or untested materials and combinations can be estimated allowing study of what they can or can not do. While these predictions are not as reliable as experimental determinations, they allow sorting what is promising from what is not. This selection of what to test can save enormous expenditure of time and money.

More detail related to the scientific background for the HSP is provided elsewhere on the website for those who wish to proceed to a fuller understanding. But to sum up in general terms, HSP tell the user where something prefers to locate. This is where the HSP are reasonably similar to its own. This can then lead to swelling and/or complete solubility, wetting and/or adsorption, permeation, or other related phenomena.

**Annex 2**

**The HSP Sphere**

HSP are measured using the Sphere technique. A set of solvents with known HSP is used to test the "happiness" of a test material in the solvents then a sphere is constructed with all the "good" solvents inside it and all the "bad" ones outside. The centre of the sphere is the HSP of the test material and the radius defines its limits of "happiness" for when you want to find other solvent systems to work with it.

If the test material is a simple polymer or crystalline solute then instead of the word "happiness" we would use the word "solubility". However, the technique is perfectly general and the definition of "happiness" varies. For nanoparticles and dispersions the definition might be "remains well suspended". For cross-linked polymers it might be "swells significantly". The point is that the formulator knows what they want for a "happy" formulation so can choose their own definition so that the measured HSP and radius are both meaningful for the given application.

Here we show the sphere of solubility of one type of polylactic acid (PLA). The centre of the sphere is a reasonable estimate of the HSP of PLA. The radius is rather large because the specific PLA was of modest MWt and crystallinity. In other (unpublished) work we have used a highly crystalline PLA which gave the same central HSP but a much smaller radius. All the good solvents (blue) are inside the sphere (transparent green), all the bad solvents (red) are outside and PLA itself is the green dot in the middle.

| No | Solvent | δD | δP | δH | Score | RED | MVol |
|---|---|---|---|---|---|---|---|
| 598 | Pyridine | 19.00 | 8.80 | 5.90 | 1 | 0.176 | 80.9 |
| 521 | N-Methyl-2-Pyrrolidone | 18.00 | 12.30 | 7.20 | 1 | 0.516 | 96.6 |
| 524 | Methylene Dichloride | 17.00 | 7.30 | 7.10 | 1 | 0.374 | 64.4 |
| 307 | 1,3-Dioxolane | 18.10 | 6.60 | 9.30 | 1 | 0.306 | 69.9 |
| 481 | Methyl Ethyl Ketone | 16.00 | 9.00 | 5.10 | 1 | 0.635 | 90.2 |
| 617 | Tetrahydrofuran | 16.80 | 5.70 | 8.00 | 1 | 0.480 | 81.9 |
| 156 | Chloroform | 17.80 | 3.10 | 5.70 | 1 | 0.554 | 80.5 |
| 7 | Acetone | 15.50 | 10.40 | 7.00 | 1 | 0.751 | 73.8 |
| 297 | Dimethyl Formamide | 17.40 | 13.70 | 11.30 | 1 | 0.841 | 77.4 |
| 303 | Dimethyl Sulfoxide | 18.40 | 16.40 | 10.20 | 1 | 0.996 | 71.3 |
| 306 | 1,4-Dioxane | 17.50 | 1.80 | 9.00 | 1 | 0.722 | 85.7 |
| 328 | Ethyl Acetate | 15.80 | 5.30 | 7.20 | 1 | 0.681 | 98.6 |
| 403 | Furan | 17.00 | 1.80 | 5.30 | 1 | 0.760 | 73.1 |
| 169 | m-Cresol | 18.50 | 6.50 | 13.70 | 1 | 0.734 | 105 |
| 637 | Toluene | 18.00 | 1.40 | 2.00 | 1 | 0.881 | 106.6 |
| 697 | Xylene | 17.80 | 1.00 | 3.10 | 1 | 0.859 | 121.1 |
| 52 | Benzene | 18.40 | 0.00 | 2.00 | 1 | 0.992 | 89.5 |
| 414 | Hexafluoro Isopropanol | 17.20 | 4.50 | 14.70 | 1 | 0.956 | 105.3 |
| 754 | Isoamyl Alcohol (3-Methyl-1-Butanol) | 15.80 | 5.20 | 13.30 | 1 | 0.963 | 109.3 |
| 10 | Acetonitrile | 15.30 | 18.00 | 6.10 | 0 | 1.331 | 52.9 |
| 255 | Diethyl Ether | 14.50 | 2.90 | 4.60 | 0 | 1.078 | 104.7 |
| 181 | Cyclohexane | 16.80 | 0.00 | 0.20 | 0 | 1.182 | 108.9 |
| 443 | Isopropyl Ether | 15.10 | 3.20 | 3.20 | 0 | 1.006 | 141.8 |
| 417 | Hexane | 14.90 | 0.00 | 0.00 | 0 | 1.390 | 131.4 |
| 325 | Ethanol | 15.80 | 8.80 | 19.40 | 0 | 1.479 | 58.6 |
| 456 | Methanol | 14.70 | 12.30 | 22.30 | 0 | 1.923 | 40.6 |
| 696 | Water | 15.50 | 16.00 | 42.30 | 0 | 3.960 | 18 |

## Claims

1. Composition for preparing a positive or negative electrode for a lithium ion or sodium ion battery, the composition comprising:

   (a) a lignin derivative,
   (b) at least one active material, and
   (c) a solvent.

2. Composition according to claim 1, wherein composition is a composition for preparing a positive electrode for a lithium ion or sodium ion battery.

3. Composition according to claim 1 or 2, wherein the solvent is or comprises water, preferably the solvent is water.

4. Composition according to any one of the preceding claims, **characterized in that** the composition does not comprise N-methyl pyrrolidone (NMP).

5. Composition according to any one of the preceding claims, wherein the lignin derivative is a sulfonated lignin, a carboxylated lignin, a hydrolyzed carboxylated lignin, or an amine-functionalized lignin.

6.  Composition according to any one of the preceding claims, wherein the lignin derivative is a sulfonated lignin.

7.  Composition according to claim 6, wherein the sulfonated lignin is lignosulfonate or sulfonated Kraft lignin, preferably lignosulfonate.

8.  Composition according to any one of the preceding claims, wherein the lignin derivative is present in an amount of 0.01 wt.% to 4.5 wt.%, dry matter, based on the overall weight of the composition, preferably 0.01 wt.% to 4.0 wt.%, more preferably 0.01 wt.% to 3.5 wt.%, more preferably 0.01 wt.% to 3.0 wt.%, more preferably 0.01 wt.% to 2.5 wt.%, more preferably 0.01 wt.% to 2.0 wt.%, more preferably 0.05 wt.% to 1.5 wt.%, more preferably 0.05 wt.% to 1.0 wt.%, more preferably 0.05 wt.% to 0.8 wt.%, more preferably 0.05 wt.% to 0.7 wt.%, more preferably 0.07 wt.% to 0.7 wt.%, 0.07 wt.% to 0.6 wt.%, more preferably 0.07 wt.% to 0.6 wt.%, more preferably 0.08 wt.% to 0.4 wt.%, more preferably 0.1 wt.% to 0.3 wt.%.

9.  Use of a lignin derivative as a dispersant in a composition for preparing a positive or negative electrode, preferably a positive electrode, for a lithium ion or sodium ion battery.

10. Use of a lignin derivative for lowering the shear rate of a composition for preparing a positive or negative electrode, preferably a positive electrode, for a lithium ion or sodium ion battery.

11. Use according to claim 9 or 10, wherein the composition is an electrode slurry, preferably a positive electrode slurry.

12. Positive or negative electrode, preferably positive electrode, for a lithium ion or sodium ion battery, **characterized in that** it is prepared from the composition according to claim 1 to 8.

13. Lithium ion or sodium ion battery, preferably lithium ion battery, **characterized in that** it comprises an electrode, preferably a positive electrode, of claim 12.

14. Method for preparing a positive or negative electrode, preferably a positive electrode, for a lithium ion or sodium ion battery, the method comprising the following steps:

    (1) applying the composition of any one of claim 1 to 8 on a substrate,
    (2) drying the composition.

15. The method of claim 14, further comprising a step (3) of compressing the product obtained from step (2) using a calendering process.

Figure 1

Figure 2

Figure 3

Figure 4

Figure 5

Figure 6

Figure 7

Europäisches
Patentamt

European
Patent Office

Office européen
des brevets

# EUROPEAN SEARCH REPORT

Application Number

EP 23 20 9215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/069232 A1 (LU HUIRAN [SE] ET AL) 8 March 2018 (2018-03-08) * paragraphs [0005], [0009], [0010], [0012], [0079], [0080]; claims 1, 3 * | 1-15 | INV. H01M4/04 C07G1/00 C09D197/00 H01M4/131 |
| X | CN 108 987 755 A (UNIV NANJING TECH) 11 December 2018 (2018-12-11) * claims 1, 2, 4; example 1 * | 1-7,9-14 | H01M4/139 H01M4/62 H01M10/0525 |

TECHNICAL FIELDS
SEARCHED (IPC)

H01M
C09J
C07B
C07G
C09D

The present search report has been drawn up for all claims

| Place of search | Date of completion of the search | Examiner |
|---|---|---|
| Munich | 15 March 2024 | Szekely, Noemi Kinga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 20 9215**

This annex lists the patent family members relating to the patent documents cited in the above-mentioned European search report.
The members are as contained in the European Patent Office EDP file on
The European Patent Office is in no way liable for these particulars which are merely given for the purpose of information.

**15-03-2024**

| Patent document cited in search report | Publication date | Patent family member(s) | | Publication date |
|---|---|---|---|---|
| US 2018069232 A1 | 08-03-2018 | CN | 107408665 A | 28-11-2017 |
| | | EP | 3266057 A1 | 10-01-2018 |
| | | SE | 1550272 A1 | 07-09-2016 |
| | | US | 2018069232 A1 | 08-03-2018 |
| | | WO | 2016144232 A1 | 15-09-2016 |
| CN 108987755 A | 11-12-2018 | NONE | | |

EPO FORM P0459

For more details about this annex : see Official Journal of the European Patent Office, No. 12/82

## REFERENCES CITED IN THE DESCRIPTION

**Non-patent literature cited in the description**

- **STEPHEN Y. LIN** ; **CARLTON W. DENCE**. Methods in Lignin Chemistry. Springer-Verlag, 1992, 458-464
- **J.H. HILDEBRAND** ; **R.L. SCOTT**. The solubility of nonelectrolytes. 1950
- **C.M. HANSEN**. Hansen Solubility Parameters, A User's Handbook. 2007
- **B.O. MYRVOLD**. The Hansen solubility of some lignosulfonates. *ResearchGate*, 2014, 303264402
- **B.O. MYRVOLD**. *ResearchGate*, 2014, 303264402
- Quantitative 31P nuclear magnetic resonance (NMR) spectra of lignin. **ARGYROPOULOS, D.S.** ; **ABACHERLI, A.** ; **RINCÓN, A.G.** ; **ARX, U.V.** Analytical Methods for Lignin Characterisation. International Lignin Institute, 2009